Europäisches Patentamt

European Patent Office

Office européen des brevets

(19)

(11) Numéro de publication : **0 491 819 B1**

(12) # FASCICULE DE BREVET EUROPEEN

(45) Date de publication du fascicule du brevet :
**13.07.94 Bulletin 94/28**

(51) Int. Cl.$^5$ : **A23L 1/325**

(21) Numéro de dépôt : **90914196.2**

(22) Date de dépôt : **14.09.90**

(86) Numéro de dépôt international :
**PCT/FR90/00662**

(87) Numéro de publication internationale :
**WO 91/03950 04.04.91 Gazette 91/08**

(54) **PROCEDE DE PREPARATION DE CHAIR DE POISSON DESARETEE, LAVEE ET RAFFINEE, COMMUNEMENT APPELE SURIMI ET PRODUITS OBTENUS.**

(30) Priorité : **15.09.89 FR 8912144**

(43) Date de publication de la demande :
**01.07.92 Bulletin 92/27**

(45) Mention de la délivrance du brevet :
**13.07.94 Bulletin 94/28**

(84) Etats contractants désignés :
**AT BE CH DE DK ES FR GB IT LI LU NL SE**

(56) Documents cités :
**WO-A-87/00733
US-A- 4 806 378
Food Technology, vol. 40, no. 3, mars 1986
(Chicago, Illinois, US), C.M. Lee: "Surimi
manufacturing and fabrication of surimi-based
products", pp. 115-124
Food Manufacture, vol. 62, no. 11, novembre
1987, (Londres, GB), "Surimi: a protein of the
future", pp. 48, 49
Patent Abstracts of Japan, vol. 13, no. 119
(C-579)(3467), 23 mars 1989, & JP-A-63294762
(Taiyo Fishery Co. Ltd.) 1 décembre 1988**

(73) Titulaire : **INSTITUT FRANCAIS DE
RECHERCHE POUR L'EXPLOITATION DE LA
MER (IFREMER)
155, rue Jean-Jacques Rousseau
F-92138 Issy-les-Moulineaux Cedex (FR)**
Titulaire : **BREUIL S.A.
ZONE Industrielle du Vern, B.P. 141
F-29402 Landivisiau Cédex (FR)**

(72) Inventeur : **HAN-CHING, Luçay
13, avenue de Pétrels
F-44300 Nantes (FR)**
Inventeur : **CHOPIN, Christine, Jacqueline,
Michèle
La Tonduère
Couffe F-44521 Oudon (FR)**
Inventeur : **MASTAIL, Max
La Herpinière
F-44039 Les Touches (FR)**
Inventeur : **KEROMNES, Bernard
Les Trézec
Plomin F-29600 Les Moriaix (FR)**

(74) Mandataire : **Phélip, Bruno et al
c/o Cabinet Harlé & Phélip
21, rue de La Rochefoucauld
F-75009 Paris (FR)**

EP 0 491 819 B1

## Description

La présente invention concerne un procédé de production de chair de poisson désarétée, lavée et raffinée appelée communément surimi . Elle a également pour objet de nouveaux produits pouvant être obtenus par ce procédé .

Il existe dans la chair de poisson trois catégories de protéines :les protéines sarcoplasmiques, les protéines du tissu conjonctif et les protéines myofibrillaires. Les protéines sarcoplasmiques sont solubles dans l'eau. Cette fraction soluble dans l'eau contient en outre des enzymes, des substrats de dénaturation susceptibles de former du formol, ainsi que des traces de métaux tels que du fer et du cuivre pouvant catalyser des réactions d'oxydation. Les protéines du tissu conjonctif sont, quant à elles, insolubles et contiennent des éléments fibrés ainsi que des sites enzymatiques . Les protéines myofibrillaires possèdent des propriétés gélifiantes, et ne sont pas solubles dans l'eau mais sont solubles dans des solutions salines.

Le procédé de préparation traditionnel du surimi existe depuis environ 300 ans (voir Lee dans Food. Technology, Novembre 1984, 69-80 et dans Food Technology, Mars 1986, 115-124) Actuellement plusieurs procédés sont employés par les producteurs de surimi japonais, américains ou norvégiens et certains de ces procédés peuvent même être mis en oeuvre à bord de bateaux spécialement équipés.

Selon un premier procédé, les poissons dont on a enlevé la tête et les viscères sont passés dans une désarêteuse, munie d'un tambour percé de trous ayant un diamètre d'environ 3 à 5 mm. Cette première étape aboutit à une pulpe, qui peut avoir diverses utilisations alimentaires, notamment pour la préparation de soupe mais ne convient pas pour une utilisation directe dans la fabrication de produits à base de surimi. En effet, cette pulpe se dénature très rapidement à l'état congelé et ses protéines perdent leur propriété de gélification, d'émulsification et de rétention d'eau, notamment du fait de la formation de formol lors de la congélation. La deuxième étape consiste en une série de lavages à l'eau, suivis d'essorages, afin d'éliminer les protéines solubles, mais aussi les graisses dans le cas des poissons gras. La troisième étape de ce procédé est une étape de pressage de la pulpe, qui permet d'éliminer l'excès d'eau et d'obtenir une pulpe ayant généralement une teneur en eau voisine de 80% qui correspond sensiblement à l'état d'équilibre de la chair de poisson en milieu aqueux, celle-ci ayant en effet par nature , une teneur en eau de l'ordre de 78% . La quatrième étape est une étape de raffinage , qui a pour but d'éliminer les tissus conjonctifs contenus dans la pulpe pressée; elle est par exemple effectuée dans une vis sans fin qui permet de séparer les chairs molles des tissus conjonctifs. Dans ce procédé connu, le raffinage est réalisé pratiquement à sec, compte-tenu de la teneur en eau de la pulpe. Ce type de raffinage a pour inconvénient notable de mal éliminer les fibres du tissu conjonctif , de ne pas éliminer le muscle rouge et de conserver des teneurs en graisses assez importantes (pour les poissons gras).

Un autre procédé (voir brevet PCT Wo-87/00733) de fabrication du surimi, comprend un lavage en continu de la pulpe , suivi d'une décantation centrifuge et d'un pressage d'où il résulte une chair ayant une humidité voisine de 80%. L'étape de raffinage finale est effectuée sur cette chair. Il s'agit donc d'un raffinage à sec, qui présente les mêmes inconvénients que le premier procédé décrit précédemment.

Selon une variante, le produit lavé et essoré en continu jusqu'à une humidité comprise entre 82 et 90% , est ensuite raffiné puis pressé pour obtenir un produit titrant 73 à 80% d'humidité , pouvant être transformé en surimi ; cette variante comporte une étape de pressage après le raffinage .

Le produit lavé et essoré de cette variante, bien que présentant une humidité de 82 à 90%, n'est pas suffisamment humide pour permettre un raffinage efficace avec des diamètres de trous fins sans échauffement du produit ni bourrage de la raffineuse lors de débits importants. De plus il y a une perte de matière dans cette variante due au fait que le raffinage est suivi d'un pressage.

Dans une autre variante de ce procédé, la pulpe, obtenue après lavage continu à l'eau et décantation centrifuge possède une humidité de 73 à 78%. Cette pulpe est ensuite soumise à un raffinage - qui dans ce cas est un raffinage à sec . Dans un tel procédé, il n'y a pas d'étape de pressage après l'étape de raffinage.

Aucun des procédés de l'art antérieur ne permet une élimination totale des tissus conjonctifs et des impuretés telles que les débris de peau . Le produit contient des impuretés que l'on doit éliminer par filtration avant fabrication de produits finis tels que le Kamaboko. En effet, il est important que le produit fourni au consommateur présente une blancheur et une texture de qualité .

Des normes permettant de déterminer la qualité d'un surimi ont été définies notamment par le Laboratoire Japonais Tokai Regional Fisheries Research Laboratory . Ces normes sont résumées dans l'article de Lee précédemment cité et portent sur les caractéristiques chimiques et visuelles du produit, notamment le taux d'humidité,le pH , la densité en impuretés , la blancheur, ainsi que sur des propriétés physiques telles que la viscosité et l'aptitude à former des gels .

L'insertion d'étapes spécifiques de filtration des produits avant fabrication des produits finis représente donc un inconvénient majeur pour l'industrie du surimi . Les inventeurs se  sont attachés à la mise au point

2

d'un nouveau procédé permettant l'obtention directe d'un produit nouveau présentant les caractéristiques de pureté et de texture correspondant de manière optimale aux normes précédemment citées . Les inventeurs ont mis en évidence de manière surprenante que l'on peut obtenir un produit de meilleure qualité par la mise en oeuvre d'un raffinage de la pulpe dans des conditions très humides suivi d'une décantation centrifuge .

La présente invention a donc pour objet un procédé de préparation de chair de poisson communément appelée surimi, comprenant la combinaison d'étapes ci-après:

(1) obtention d'une chair de poisson haché,

(2) lavage à l'eau de cette chair,

(3) essorage de la chair lavée jusqu'à obtention d'une pulpe titrant au moins 92% d'humidité,

(4) raffinage à l'état humide de ladite pulpe,

(5) décantation centrifuge de la pulpe raffinée,sans pressage de celle-ci, jusqu'à obtention d'une pulpe titrant environ 80% d'humidité,

(6) transformation en surimi de la pulpe.

L'étape d'élimination d'eau par essorage a pour but d'éliminer le surplus d'eau apporté par le lavage de la chair de poisson et peut être effectuée à l'aide d'une essoreuse à grille . Le couplage d'une étape de raffinage et d'une étape de décantation permet d'éviter la perte de matières fines , qui a lieu dans le cas du pressage utilisé dans les procédés de l'art antérieur .

Le raffinage à l'état humide selon l'invention c'est-à-dire avec une teneur en eau d'un minimum de 92% est à distinguer du raffinage dit à l'état sec qui se fait sur une pulpe ayant une teneur en eau d'environ 80%, teneur en eau proche de celle de la chair de poisson.

Un des avantages notables du raffinage à l'état humide est l'élimination du muscle rouge. En effet, dans un raffinage à sec, c'est-à-dire avec une humidité de 80% , il y a équilibre entre la chair et le milieu de lavage, mais lors d'un raffinage à l'état humide, cet équilibre n'existe pas et les différents composants de la chair réagissent de manière diverse. Les protéines du muscle blanc ont tendance à gonfler alors que les protéines du muscle rouge ne gonflent pas. Cette situation permet la formation dans le cas du muscle blanc d'un produit intermédiaire entre un gel et la pulpe qui peut passer à travers des trous d'un diamètre d'environ 1 mm alors que le muscle rouge qui est plus dur et ne gonfle pas ne peut passer à travers ces trous .

Un autre avantage du procédé selon l'invention est une meilleure élimination , par comparaison aux procédés de l'art antérieur , des fibres du tissu conjonctif ainsi que des impuretés de taille supérieure à 2 mm , telles que les débris de peau,qui jusqu'à présent devaient être éliminés à l'aide d'un filtre, car ils confèrent au produit fini une couleur noire qui est néfaste à sa commercialisation.

Un autre avantage de ce raffinage de la pulpe dans des conditions très humides concerne l'élimination totale des graisses résiduelles non éliminées au cours du premier lavage et de l'essorage , dans le cas des poissons gras . En effet, le raffinage à l'état humide facilite la dislocation des structures des cellules grasses.

Selon un mode de mise en oeuvre particulier de l'invention, le raffinage humide est effectué à l'aide d'une raffineuse à corps cylindrique comportant des trous d'un diamètre d'environ 1 mm .

Selon un autre mode de mise en oeuvre du procédé selon l'invention, l'étape d'élimination finale de l'eau (5) est effectuée à l'aide d'une décanteuse centrifuge.

Le procédé selon l'invention peut aussi comprendre une étape d'élimination des graisses par décantation centrifuge , effectuée préalablement à l'étape d'essorage (4).

De plus, de manière avantageuse le lavage de la chair (2) peut être effectué en continu dans un chambreur .

Le procédé selon l'invention peut en outre comprendre une étape d'addition de cryoptrotecteurs à la pulpe issue de l'étape (5). Une telle addition peut être effectuée à l'aide d'un mélangeur en continu.

L'invention a d'autre part pour objet un surimi d'une espèce de poisson caractérisé par le fait que sa teneur en impuretés de taille supérieure à 2 mm est réduite d'au minimum 95% et préférentiellement de 100% par rapport au surimi conventionnel provenant de la même espèce.

Selon un mode de mise en oeuvre particulier de l'invention le surimi d'une espèce de poisson gras a une teneur en matières grasses résiduelles extractibles à l'hexane inférieure à 1%, quel que soit l'espèce de poisson.

Les matières grasses sont extraites pour la mesure , par exemple à l'aide d'un appareil Soxtec système HTZ, sont récupérées dans un pot taré puis sont mises à sécher 30 mn à 103°C avant pesée.

Des espèces préférentielles de poisson gras permettant d'obtenir un surimi selon l'invention sont notamment la sardine et le chinchard.

Selon un autre mode de mise en oeuvre de l'invention, le surimi de merlan bleu est caractérisé par le fait que son indice de pliage est AA et que sa teneur en impuretés de taille supérieure à 2 mm est quasiment nulle.

Selon encore un autre mode de mise en oeuvre de l'invention, le surimi de tacaud est caractérisé par le fait que son indice de pliage est AA et que sa teneur en impuretés de taille supérieure à 2 mm est quasiment nulle.

L'indice de pliage est une des mesures permettant d'apprécier la qualité d'un surimi L'échelle comprend les indices AA qui correspondent à une résistance maximale au pliage , A, B, C et D, cette dernière correspondant à une friabilité maximale.

Selon encore un autre mode de mise en oeuvre de l'invention, le produit contient des additifs et notamment des cryoprotecteurs ,tels que des polyphosphates ou des sucres.

La description qui suit donne à titre illustratif et non limitatif des exemples d'application de l'invention.

La figure 1 décrit les étapes d'un procédé de préparation de surimi de poissons gras selon l'invention.

La figure 2 représente un dispositif permettant la préparation de surimi de poissons maigres selon l'invention.

La figure 3 représente un dispositif de lavage en continu de la pulpe .

La figure 4 représente un dispositif de mélange en continu des cryoprotecteurs .

Sur ces trois dernières figures, les flèches représentent le transit de la pulpe .

EXEMPLE

EXEMPLE 1

Procédé et dispositif de préparation du surimi.

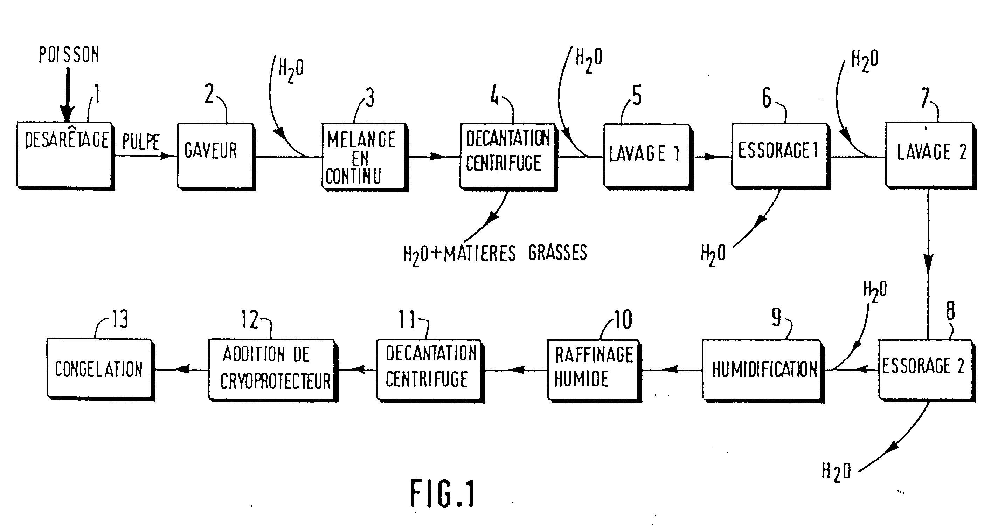

Le procédé de préparation schématisé sur la figure 1 est un procédé de préparation de surimi de poissons gras à l'aide du couple raffinage en conditions très humides et décantation centrifuge.

Des poissons étêtés et éviscérés sont désarêtés dans une désarêteuse (1) , puis la pulpe est introduite dans un gaveur (2) , mélangée en continu avec addition d'eau (3), soumise à une décantation centrifuge (4) puis à une double série de lavages(5) et (7) et d'essorages(6) et (8) .

La pulpe essorée est alors humidifiée (9), puis raffinée (10) et soumise à une décantation centrifuge (11). Des cryoprotecteurs sont ajoutés (12) avant congélation (13).

L'étape de décantation centrifuge (4) n'est nécessaire que dans le cas de préparation de surimi de poissons gras et permet alors une première élimination de 70% à 75% de la matière grasse totale.

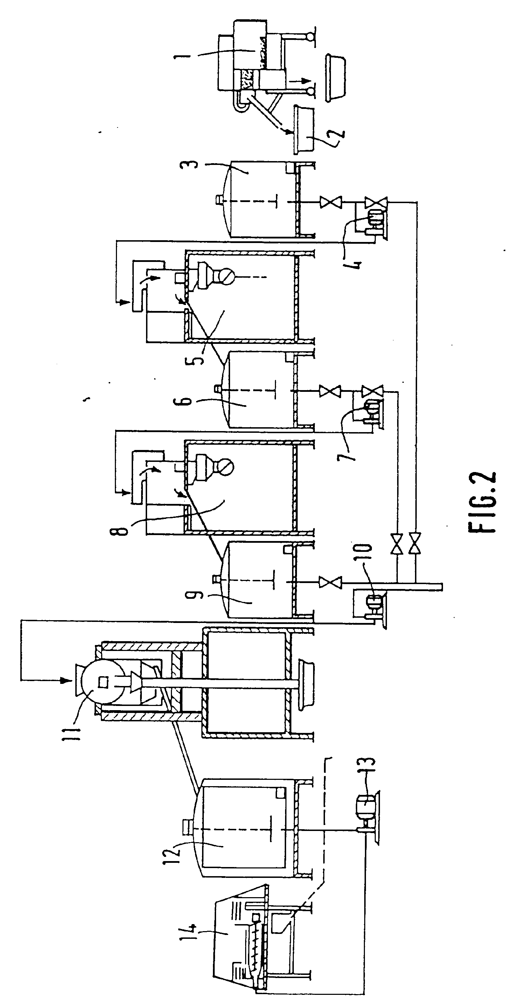

Le dispositif de préparation du surimi de poissons maigres de la figure 2 comprend une désarêteuse de type Baader 694 (1) . La pulpe désarêtée est rejetée dans le récipient (2) puis est introduite dans la cuve de lavage (3) d'où elle est transférée à l'aide de la pompe (4) dans une essoreuse (5).Cette opération est répétée à l'aide de la cuve (6), de la pompe (7) et de. l'essoreuse (8), puis la pulpe est humidifiée dans la cuve (9) et transférée à l'aide de la pompe (10) dans la raffineuse (11), puis dans la cuve (12) d'où elle est transférée à l'aide de la pompe (13) et la décanteuse centrifuge (14).Ce dispositif est complété par un hachoir-mélangeur dans lequel la pulpe est finalement mélangée avec des cryoprotecteurs (ne figure pas sur la figure 2) .

Sur cette figure les traits pleins représentent le circuit de la pulpe.

EXEMPLE 2

Procédé de lavage de la pulpe en continu.

Les étapes (5)(6) et/ou (7)(8) de lavages et d'essorages de la pulpe telles que décrites dans le procédé de l'exemple 1 peuvent être remplacées par un lavage en continu.

La pulpe issue de l'étape de décantation centrifuge est mélangée et lavée avec de l'eau par chambrage .

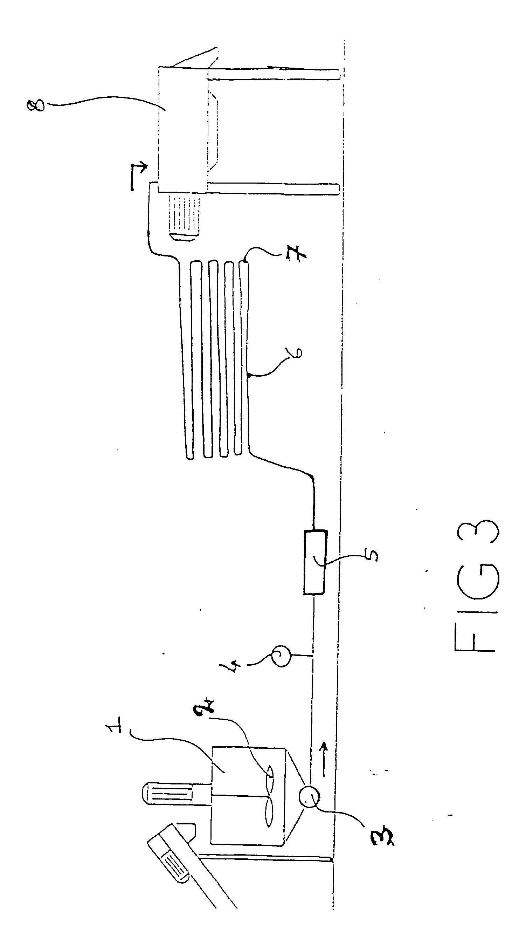

Le dispositif de la figure 3 permet une telle opération . Il comprend :
- un bac tampon (1) muni d'un élément brassant la pulpe (2) et d'une pompe (3) permettant d'ajuster le débit de pulpe ,
- une pompe régulant l'arrivée d'eau (4),
- un mélangeur (5) assurant le mélange de la pulpe et de l'eau;
- un chambreur en continu constitué d'un tuyau de plusieurs dizaines de mètres, présentant des parties linéaires (6) d'environ 5 mètres, lesdites parties linéaires étant séparées par les parties coudées du tuyau (7) et étant pourvues par intermittence d'hélices permettant le brassage du mélange pulpe-eau, et
- une essoreuse (8) éliminant l'eau contenue dans le mélange .

Ce dispositif alternant temps de repos et temps de brassage du mélange pulpe-eau permet un meilleur lavage de la pulpe du fait d'une meilleure pénétration par l'eau.

Le temps de lavage peut être ajusté en supprimant une ou plusieurs des parties linéaires du tuyau du chambreur ce qui a pour effet de raccourcir le chemin parcouru par le mélange pulpe/eau.

Cet ajustement est effectuée en fonction du type de poisson.

Ce dispositif permet d'assurer un temps de contact constant entre la pulpe et l'eau , pendant toute la production du surimi, garantissant ainsi une homogénéité du produit final.

EXEMPLE 3

Dosage et mélange des cryoprotecteurs en continu :

L'étape (12) d'addition de cryoprotecteurs de la figure 1 peut être effectuée en continu.

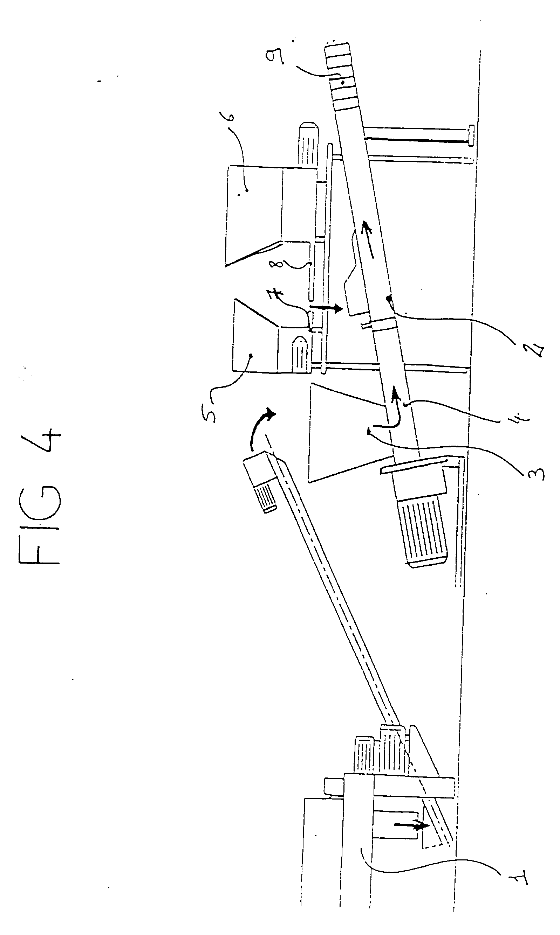

Le dispositif permettant cette opération est schématisé sur la figure 4 et comprend un mélangeur en continu (2) qui reçoit dans une cuve (3) la pulpe déshydratée issue du décanteur centrifuge (1).

Ce mélangeur comprend des vis gaveuses qui vont pousser la pulpe dans le corps de la machine (4). Ces vis dotées de variateurs de vitesse permettent un contrôle du volume de pulpe.

Les additifs, polyphosphates et sucres, contenus dans les cuves (5) et (6) sont ajoutés à l'aide des doseurs (7) et (8) dont le débit volumétrique est modulé par des variateurs.

Le mélange est effectué à l'extrémité du corps (9) du mélangeur, afin de permettre la dissolution des sucres dans la pulpe .

Ce dispositif de mélange en continu assure un débit continu de la pulpe et des cryoprotecteurs, garantissant un meilleur respect des quantités de cryoprotecteurs par rapport à un mélange manuel.

EXEMPLE 4

Comparaison de surimi de merlan bleu norvégien obtenu par le procédé de l'exemple 1 et par des procédés décrits dans l'art antérieur .

a) Dénombrement des impuretés.

10g de surimi sont pressés entre deux plaques de plexiglass ou de verre de 10 x 10 cm . On effectue un comptage des impuretés. Une note est affectée en fonction du nombre obtenu.

Les impuretés de tailles inférieures à 2 mm sont comptées 0,5, celles de taille supérieures à 2 mm sont comptées 1.

Le tableau I donne la relation entre des intervalles de nombre d'impuretés et des notes.

TABLEAU I

---------

| Note | Nombre impuretés | Note | Nombre impuretés |
|------|------------------|------|------------------|
| 10 | O | 5 | 12-15 |
| 9 | 1-2 | 4 | 16-19 |
| 8 | 3-4 | 3 | 20-25 |
| 7 | 5-7 | 2 | 26-30 |
| 6 | 8-11 | 1 | supérieur à 30 |

b)Test de pliage

Des éprouvettes de 30 mm de diamètre sont découpées à l'emporte-pièce . On sectionne ensuite ces éprouvettes en rondelles de 3 mm d'épaisseur.

Le nombre de pliures pouvant être effectué avant cassure de la rondelle est déterminé et permet d'attribuer un indice AA, A, B, C ou D. Le tableau II donne la correspondance entre cet indice et la caractéristique du surimi.

TABLEAU II
----------

| Catégorie | Conditions requises |
|---|---|
| AA | Aucune rupture de la rondelle après avoir plié en 2 puis en 4 |
| A | Rupture après avoir plié en 4 |
| B | Cassures progressives après avoir plié la rondelle en 2 |
| C | Cassures franches après avoir plié la rondelle en 2 |
| D | Rondelle friable sous les doigts |

c)Comparaison des surimis de merlan bleu

Les surimis testés ont été préparés à bord de bateaux par le procédé selon l'invention et par les procédé mentionné page 1 ligne 34 et page 2 de la présente description (NORV N°1 et NORV N°2 correspondent à deux tests de ce procédé ).

Les paramètres mesurés sur ces surimis sont résumés dans le tableau III et montrent que:
- les teneurs en protéines et en eau n'ont pas changé de manière significative,
- dans le kamaboko , le procédé selon l'invention a permis d'éliminer les impuretés de taille supérieure à 2mm,
- les caractéristiques du gel ont été améliorées de manière importante.

TABLEAU III

------------

| Caractéristiques du surimi | Procédé de l'art antérieur | | Procédé selon l'invention | |
|---|---|---|---|---|
| | NORV N°1 | NORV N°2 | | |
| Teneur en protéines (% de matière sèche ) | 70% | 68,6% | 63 % | 66% |
| Impuretés totale (Note ) | 7 | 6 | 6 | 6 |
| Impuretés sup.à 2mm dans le Kamaboko | présence | présence | absence | absence |
| Teneur en eau% | 75,9% | 77,9% | 76,5% | 78% |
| Force à la rupture (N) | 3,9 | 5,1 | 5,4 | 5,7 |
| Force de gel (g/cm) | 385 | 573 | 755 | 838 |
| Test de pliage | C | AA à A | AA | AA |
| Pourcentage d'étirement | 80,4% | 22,5% | 91,5%, | 111% |

**Revendications**

1. Procédé de préparation de chair de poisson communément appelée surimi comprenant la combinaison d'étapes ci-après:
   (1) obtention d'une chair de poisson haché,
   (2)lavage à l'eau de cette chair,
   (3) essorage de la chair lavée jusqu'à obtention d'une pulpe titrant au moins 92% d'humidité,
   (4)raffinage à l'état humide de ladite pulpe,
   (5)décantation-centrifuge de la pulpe raffinée,sans pressage de celle-ci, jusqu'à obtention d'une pulpe titrant environ 80% d'humidité,
   (6) transformation en surimi de la pulpe.

2. Procédé selon la revendication 1, caractérisé en ce que l'étape d'élimination d'eau (3) est effectuée à l'aide d'une essoreuse à grille .

3. Procédé selon l'une quelconque des revendications 1 et 2, caractérisé en ce que le raffinage (4) est effectué à l'aide d'une raffineuse ayant un corps cylindrique comportant des trous d'un diamètre de 1 mm .

4. Procédé selon l'une quelconque des revendications 1 à 3, caractérisé en ce que l'étape d'élimination finale de l'eau (5) est effectuée à l'aide d'une décanteuse centrifuge .

5. Procédé de préparation de surimi de poissons gras selon l'une quelconque des revendications 1 à 4, caractérisé en ce qu'on effectue préalablement à l'étape d'essorage (3) une élimination des graisses par décantation centrifuge.

6. Procédé selon l'une quelconque des revendications 1 à 5, caractérisé en ce que le lavage de la chair (2) est effectué en continu dans un chambreur .

7. Procédé selon l'une quelconque des revendications 1 à 6, caractérisé en ce que des cryoprotecteurs sont ajoutés à la pulpe issue de l'étape (5).

8. Procédé selon la revendication 7, caractérisé en ce que les cryoprotecteurs sont ajoutés à l'aide d'un mélangeur en continu.

9. Surimi d'une espèce de poisson, susceptible d'être obtenu par le procédé selon l'une des revendications 1 à 8, caractérisé en ce que sa teneur en impuretés de taille supérieure à 2 mm est réduite de 100 % par rapport au surimi conventionnel provenant de la même espèce.

10. Surimi selon la revendication 9, caractérisé en ce que l'espèce est du type poisson gras, auquel cas sa teneur en matières grasses résiduelles extractibles à l'hexane est inférieure à 1%.

11. Surimi selon la revendication 10, caractérisé en ce que le poisson gras est le chinchard ou la sardine.

12. Surimi de merlan bleu selon la revendication 9, caractérisé en ce que son indice de pliage est AA et que sa teneur en impuretés de taille supérieure à 2 mm est nulle.

13. Surimi de tacaud selon la revendication 9, caractérisé en ce que son indice de pliage est AA et que sa teneur en impuretés de taille supérieure à 2 mm est nulle.

14. Surimi selon l'une quelconque des revendications 8 à 13, caractérisé en ce qu'il contient des additifs et notamment des cryoprotecteurs tels que des polyphosphates ou des sucres.


**Patentansprüche**

1. Verfahren zur Zubereitung von Fischfleisch, welches gemeinhin Surimi genannt wird, umfassend die folgende Kombination von Schritten:
   (1) Herstellung eines zerkleinerten Fischfleischs,
   (2) Waschen dieses Fleischs mit Wasser,
   (3) Schleudern des gewaschenen Fleisches, bis man eine Paste erhält, deren Feuchtigkeitsgehalt zu mindestens 92% bestimmt wird,
   (4) Raffinierung der Paste in feuchtem Zustand,
   (5) Zentrifugieren der raffinierten Paste, ohne Druck darauf auszuüben, bis man eine Paste erhält, deren Feuchtigkeitsgehalt zu etwa 80% bestimmt wird,
   (6) Umwandlung der Paste zu Surimi.

2. Verfahren gemäß Anspruch 1, dadurch gekennzeichnet, daß der Wasserentfernungsschritt (3) mit Hilfe einer Siebzentrifuge durchgeführt wird.

3. Verfahren gemäß einem der Ansprüche 1 oder 2, dadurch gekennzeichnet, daß die Raffinierung (4) mit Hilfe einer Raffiniervorrichtung mit zylindrischem Behälter durchgeführt wird, der Löcher mit einem Durchmesser von 1 mm enthält.

4. Verfahren gemäß einem der Ansprüche 1 bis 3, dadurch gekennzeichnet, daß der letzte Wasserentfernungschritt (5) mit Hilfe einer Zentrifuge durchgeführt wird.

5. Verfahren zur Herstellung von Surimi aus fetten Fischen gemäß einem der Ansprüche 1 bis 4, dadurch gekennzeichnet, daß man vor dem Schleuderschritt (3) eine Entfernung der Fette durch Zentrifugieren durchführt.

6. Verfahren gemäß einem der Ansprüche 1 bis 5, dadurch gekennzeichnet, daß das Waschen des Fischtleische (2) kontinuierlich in einer Behandlungskammer durchgeführt wird.

7. Verfahren gemäß einem der Ansprüche 1 bis 6, dadurch gekennzeichnet, daß Gefrierschutzmittel der Paste am Ende des Schrittes (5) zugefügt werden.

8. Verfahren gemäß Anspruch 7, dadurch gekennzeichnet, daß die Gefrierschutzmittel mit Hilfe eines Mischers kontinuierlich zugefügt werden.

9. Surimi einer Fischart, das man nach dem Verfahren gemäß einem der Ansprüche 1 bis 8 erhalten kann, dadurch gekennzeichnet, daß sein Gehalt an Verunreinigungen mit einer Größe von über 2 mm im Vergleich zu konventionellem Surimi aus der gleichen Fischart zu 100% reduziert ist.

10. Surimi gemäß Anspruch 9, dadurch gekennzeichnet, daß der Typ der Fischart fett ist, in welchem Fall sein Restgehalt an mit Hexan extrahierbaren Fetten unter 1% liegt.

11. Surimi gemäß Anspruch 10, dadurch gekennzeichnet, daß es sich bei dem fetten Fisch um Schildmakrele oder Sardine handelt.

12. Surimi von blauem Merlan gemäß Anspruch 9, dadurch gekennzeichnet, daß sein Faltungsindex AA ist und daß es keinerlei Verunreinigungen mit einer Größe über 2 mm enthält.

13. Surimi von Französischem Dorsch gemäß Anspruch 9, dadurch gekennzeichnet, daß sein Faltungsindex AA ist und daß es keinerlei verunreinigungen mit einer Größe über 2 mm enthält.

14. Surimi gemäß einem der Ansprüche 8 bis 13, dadurch gekennzeichnet, daß es Zusatzstoffe und insbesondere Gefrierschutzmittel wie Polyphosphate oder Zucker enthält.


**Claims**

1. Method for preparing fishmeat, commonly called surimi, comprising the following combination of stages:
   (1) obtaining a chopped fishmeat,
   (2) washing this meat with water,
   (3) drying the washed meat until a pulp is obtained which contains at least 92% moisture,
   (4) refining said pulp in the moist state,
   (5) decanting the refined pulp by centrifuging, without pressing of the pulp, until a pulp is obtained which contains approximately 80% moisture,
   (6) turning the pulp into surimi.

2. Method according to claim 1, characterized in that the water removal stage (3) is carried out using a grid-type dryer.

3. Method according to either one of claims 1 or 2, characterized in that the refining (4) is carried out using a refiner having a cylindrical body comprising holes of a diameter of 1 mm.

4. Method according to any one of claims 1 to 3, characterized in that the stage of final removal of water (5) is carried out using a centrifugal decanter.

5. Method for preparing surimi from fatty fish according to any one of claims 1 to 4, characterized in that, prior to the drying stage (3), a removal of the fats is carried out by centrifugal decanting.

6. Method according to any one of claims 1 to 5, characterized in that the washing of the meat (2) is carried out continuously in a holder.

7. Method according to one of claims 1 to 6, characterized in that cryopreservatives are added to the pulp issuing from stage (5).

8. Method according to claim 7, characterized in that the cryopreservatives are added using a flow mixer.

9. Surimi from a fish species , which is likely to be obtained by the method according to anyone of the claims 1 to 8, characterized in that its content of impurities of a size greater than 2 mm is reduced by 100 %, compared to the conventional surimi originating from the same species.

10. Surimi according to claim 9, characterized in that the species is of the fatty fish type, in which case its content of residual fatty substances , extractable with hexane, is less than 1% .

11. Surimi according to claim 10, characterized in that the fatty fish is the horse mackerel or sardine.

12. Surimi from mackerel according to claim 9, characterized in that its folding grade is AA and its content of impurities of a size greater than 2 mm is nil.

13. Surimi from withing pout according to claim 9, characterized in that its folding grade is AA and its content of impurities of a size greater than 2 mm is nil.

14. Surimi according to any one of claims 8 to 13, characterized in that it contains additives and in particular cryopreservatives, such as polyphosphates or sugars.

POISSON

DESARÊTAGE (1) — PULPE → GAVEUR (2) → MELANGE EN CONTINU (3) [H₂O] → DECANTATION CENTRIFUGE (4) [H₂O] → LAVAGE 1 (5) → ESSORAGE 1 (6) → LAVAGE 2 (7) [H₂O]

DECANTATION CENTRIFUGE (4) → $H_2O$ + MATIERES GRASSES

ESSORAGE 1 (6) → $H_2O$

CONGELATION (13) ← ADDITION DE CRYOPROTECTEUR (12) ← DECANTATION CENTRIFUGE (11) ← RAFFINAGE HUMIDE (10) ← HUMIDIFICATION (9) [H₂O] ← ESSORAGE 2 (8)

LAVAGE 2 (7) → ESSORAGE 2 (8)

ESSORAGE 2 (8) → $H_2O$

FIG.1

EP 0 491 819 B1

FIG.2

FIG 3

FIG 4